# EUROPEAN PATENT SPECIFICATION

(11) **EP 1 347 590 B1**
(45) Date of publication and mention of the grant of the patent: **30.04.2008**
(21) Application number: 03006483.6
(22) Date of filing: 21.03.2003
(51) Int. Cl.: H04J 14/02

(54) **Wavelength division multiplexing passive optical network system**
Wellenlängenmultiplex-Übertragungssystem im passiven optischen Netzwerk
Système de transmission à multiplexage en longueurs d'onde dans un réseau optique passif

(30) Priority: 21.03.2002 KR 2002015251
(43) Date of publication of application: 24.09.2003
(73) Proprietor: SAMSUNG ELECTRONICS CO., LTD., Suwon-City, Kyungki-do (KR)
(72) Inventor: Park, Tae-Sung, c/o Samsung Electronics Co.Ltd., Suwon-city, Kyungki-do (KR)
(74) Representative: Grünecker, Kinkeldey, Stockmair & Schwanhäusser Anwaltssozietät

(56) References cited:
- DE-A1- 3 632 047
- US-A- 5 969 836
- HERBER R ET AL: "MUNDI - EIN RACE-FORSCHUNGSPROJEKT" NACHRICHTENTECHNIK ELEKTRONIK, VEB VERLAG TECHNIK. BERLIN, DE, vol. 45, no. 1, January 1995 (1995-01), pages 29-30, XP000764435 ISSN: 0323-4657
- HILBK U ET AL: "High capacity WDM overlay on a passive optical network" ELECTRONICS LETTERS, IEE STEVENAGE, GB, vol. 32, no. 23, 7 November 1996 (1996-11-07), pages 2162-2163, XP006005967 ISSN: 0013-5194

## Description

The present invention relates generally to a passive optical network, and more particularly, to a wavelength division multiplexing passive optical network system, an optical line termination apparatus, an optical network element apparatus and an operation method.

A variety of network configurations, e.g., xDSL (x-Digital Subscriber Line), HFC (Hybrid Fiber Coax), FTTB (Fiber To The Building), FTTC (Fiber To The Curb), or FTTH (Fiber To The Home) have been suggested for the configuration of subscriber networks from a central office to a customer premise environment, e.g., buildings and homes.

Implementation of those FTTx (i.e., FFTB, FTTC, FTTH) can be divided into two categories; (1) an active FTTx with an active optical network (AON) and (2) a passive FTTx with a passive optical network (PON). The passive optical network, because of a point-to-multipoint topology through passive elements, is expected to be a future optical subscriber network having a good economic value.

In general, the passive optical network is a subscriber network configuration forming a tree-shaped distributed topology. A plurality of optical network units (ONU) are connected to an optical line termination (OLT) using a1xN passive power splitter. The ITU-T (International Telecommunication Union-Telecommunication sect) has promulgated standards on ATM-PON (Asynchronous Transfer Mode-Passive Optical Network) system as ITU-T.G.982, ITU-T.G.983.1, and ITU-T.G.983.3. In addition, IEEE802.3ah TF (Institute of Electrical and Electronics Engineers) is working on standardization of a Gigabit Ethernet based passive optical network system.

Work regarding the transmission capacity in the ATM-PON system and Ethernet-passive optical network system is also being discussed in the international standard organizations like the ITU-T and IEEE802.3. The transmission capacity is usually dependent on the data format being loaded on two different wavelengths between an optical line termination and an optical network element. In this regard, the international standard organizations (e.g., ITU-T and IEEE802.3), are considering a 1550nm (or 1490nm) and a 1310 wavelengths for these two different wavelengths. The downstream transmission from an optical line termination of the central office to a subscriber's optical network element would involve loading asynchronous transfer mode cell (ATM cell) or Ethernet frame on a 1550nm (or 1490nm) wavelength-signal, while the upstream transmission from an optical line termination of the central office to a subscriber's optical network element would involve loading data on a 1310nm wavelength-signal.

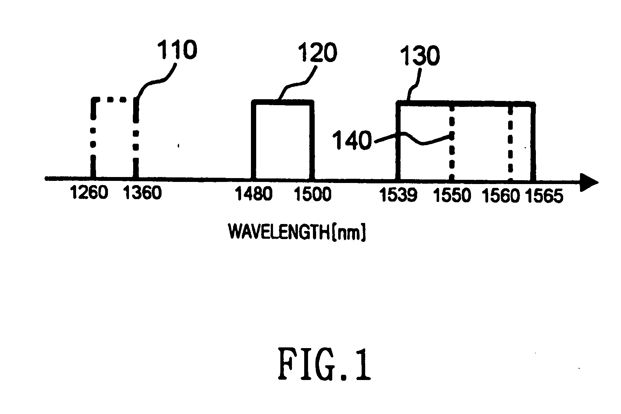

FIG. 1 is a diagram representing wavelength allocation of ATM-PON system, which is regulated by ITU-T. Particularly, the drawing illustrates an upstream wavelength band 110 and downstream wavelength bands 120 and 130.

For the upstream wavelength band 110, a wavelength band in the range between 1260nm to 1360nm is allocated for optical signals progressing from an optical network element to an optical line termination.

For the downstream wavelength bands 120 and 130, a wavelength band in the range between 1480nm to 1500nm and a wavelength band in the range of from 1539nm to 1565nm, respectively, are allocated to the downstream wavelength bands 120 and 130 for optical signals progressing from an optical line termination to an optical network element. The wavelength band in the range of 1539nm - 1565nm is called a digital service wavelength band 130, and 1550nm - 1560nm wavelength band 140 contained within the digital service wavelength band 130 is reserved for digital image signals.

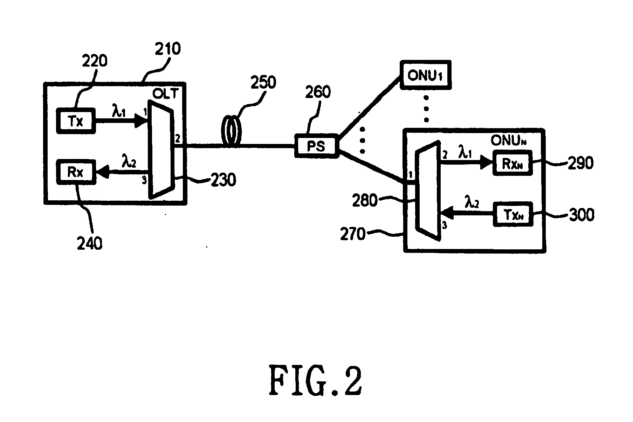

FIG. 2 is a schematic diagram of a conventional passive optical network system. The passive optical network system includes an optical line termination 210, a fiber 250, a power splitter (PS) 260, and n-optical network elements 270 (denoted as ONU₁ through ONU_{N}).

The optical line termination 210 includes an optical transmitter (Tx) 220, an optical receiver (Rx) 240, and an optical divider 230.

The optical transmitter 220 includes a laser diode (LD) (not shown)that is used to output downstream channels having a wavelength of either 1550nm or 1490nm.

The optical receiver 240 typically includes a photodiode that is used convert 1310nm-wavelength upstream channels, which have been inputted through a third port of the optical divider 230, to electric signals before outputting the same.

A 1x2 wavelength division multiplexer (WDM) is typically used for the optical divider 230. The optical divider 230 outputs the downstream channels that are inputted through a first port to a second port, and then outputs the upstream channels that are inputted through the second port to a third port. In Fig. 2, the second port is connected to the fiber 250.

A 1x n power splitter is typically used for the power splitter 260. The power splitter 260 performs a uniform power split on the downstream channels inputted through the fiber 250, and then outputs the split channels to the n optical network elements 270.

Each of the n-optical network elements 270 include an optical divider 280, an optical receiver 290, and an optical transmitter 300.

A 1x2 wavelength division multiplexer (WDM) is typically used for the optical divider 280. The optical divider 280 outputs the downstream channels that are inputted through a first port connected to the fiber 250 to a second port, and it outputs the upstream channels that are inputted through a third port to the second port.
the optical receiver 240 typically includes a photodiode. The optical receiver 240 converts the downstream channels having a wavelength of 1550nm or 1490nm, which have been inputted through the third port of the optical divider 230, to electric signals before outputting the same.
the optical transmitter 300 typically includes a laser diode(LD). The optical transmitter 300 outputs the upstream channels with a wavelength of 1550nm or 1490nm.

The transmission capacity of upstream and downstream channels may be increased following an increase in bandwidth usage by the subscriber side in the ATM-PON system and Ethernet-passive optical network system, by increasing the transfer speed per channel. This approach is being discussed in the ITU-T and the IEEE802.3 organizations. However, this approach has significant shortcomings. For example, the conventional ATM-PON system sets a limit on the data transfer speed, (i.e., 155Mbps for upstream channels and 622Mbps for downstream channels). Also, the implementation of the data transfer speed at 1.25Gbps for both directions in the Ethernet-passive optical network has not been decided upon by any International Standards Organization

R. Herber et al: "MUNDI - ein RACE-Forschungsprojekt" Forschungszentrum der Deutschen Tetekom. January 1995, pages 29-30 relates to the usage of wavelength division multiplex for achieving higher bandwidth in glass fiber subscriber terminals. A 1.3/1.5 micrometer wavelength division multiplex is used. The wavelength multiplex scheme starts from a free 1500nm window. In this window, eight optical channels with two nm distance are arranged. In the upper part of a EDFA window, 16 wavelengths with one nm distance are arranged. For the separation of the upstream and downstream direction, two fibers are used. An optical switch organizes and allocates the different wavelengths. The wavelengths are not controlled, the lasers are merely stabilized in view of current temperature. Figure 2 shows an interactive service at 1310nm, and several channels in the 1500nm region with one or two nm distance.

Similarly, U. Hilbk et al : "High capacity WDM overlay on a passive optical network" Electronic Letters, 7 th November 1996, Vol. 32, No. 23 relates to a WDM overlay on a PON system, wherein the multiplex scheme uses the free 1500 nm window and the spacing between the upstream wavelength and the downstream wavelength is chosen to be identical to the free spectral range (FSR) of the used AWG (ca. 800 GHz). The downstream channels are separated by a one or two nm distance.

Therefore, there is a need in the art for systems and methods that expand the transmission capacity beyond a maximum transfer speed allowed to every single channel in the passive optical network systems discussed above.

It is the object of the present invention to provide a low priced wavelength division multiplexing passive optical network system, an improved optical line termination apparatus, an improved optical network element apparatus and an operation method.

This object is solved by the subject matters of the independent claims.

Preferred embodiments are defined in the dependent claims.

According to one embodiment of the present invention a wavelength division multiplexing passive optical network system is provided, including: an optical line termination for transmitting downstream optical signals through a fiber. The downstream optical signals are obtained by performing wavelength division multiplexing on downstream channels having different wavelengths from one another, and for demultiplexing upstream optical signals received through the fiber. The upstream optical signals are configured of a first and a second upstream channels having different wavelengths from one another. A power splitter performs a uniform power split on the downstream optical signals received through a first port that is connected to the fiber, and output the split optical signals through a plurality of second ports, as well as outputting upstream optical signals through the first port. The upstream optical signals are combination of the first and the second upstream channels received from the plurality of second ports. The system also includes a plurality of optical network elements for demultiplexing the downstream optical signals from the second port of the power splitter by wavelengths, and for transmitting the first and the second upstream channels to the power splitter. The wavelength gap between the wavelengths of the downstream channels and the second upstream channel is approximately 20 nm.

The above features and advantages of the present invention will become more apparent from the following detailed description when taken in conjunction with the accompanying drawings in which:
FIG. 1 diagrammatically illustrates wavelength allocation of ATM-PON system, which is regulated by ITU-T;
FIG. 2 is a schematic diagram of a conventional passive optical network system;
FIG. 3 is a diagram representing wavelength allocation of a passive optical network system in accordance with a preferred embodiment of the present invention;
FIG. 4 is a schematic diagram of the passive optical network system in accordance with the preferred embodiment of the present invention;
FIG. 5 is a diagram showing output characteristic of an optical line termination depicted in FIG. 4 against a wavelength division multiplexer;
FIG. 6 is a diagram illustrating output characteristic of an optical line termination depicted in FIG. 4 against an optical divider;
FIG. 7 is a diagram illustrating output characteristic of an Nth optical network element depicted in FIG. 4 against a Nth wavelength division multiplexer; and
FIG. 8 is a diagram illustrating output characteristic of an Nth optical network element depicted in FIG. 4 against a (N-1)th wavelength division multiplexer.

A preferred embodiment of the present invention will be described herein below with reference to the accompanying drawings. In the following description, well-known functions, elements, devices or constructions are not described in detail since they would obscure the invention in unnecessary detail.

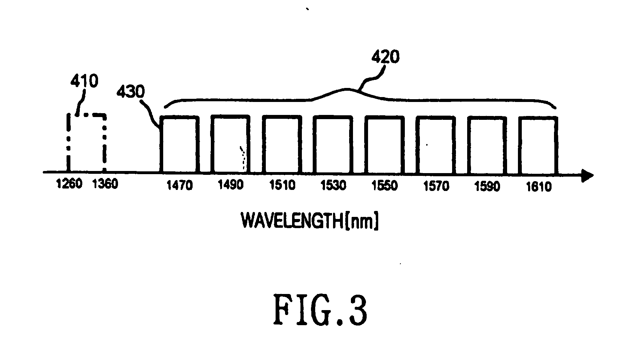

FIG. 3 is a diagram representing wavelength allocation of a passive optical network system in accordance with a preferred embodiment of the present invention. FIG. 3 illustrates an upstream wavelength band 410, and a downstream wavelength 1550nm (or 1490nm) and additional bidirectional wavelength band 420.

The wavelength allocated to the upstream wavelength band 410 falls within the range of 1260 - 1360nm, and it serves as a wavelength band for optical signals progressing from an optical network element to an optical line termination.

A wavelength band in the range of 1470- 1610nm is allocated to the additional bidirectional wavelength band 420. It serves as a wavelength band for optical signals progressing from an optical line termination to each optical network element, or from each optical network element to an optical line termination. Particularly, 1550nm-wavelength is allocated for digital image signals. The bidirectional wavelength band 420 includes 8 channels 430 including the 1550nm-wavelength for digital image signals. The wavelength gap between the channels 430 is approximately 20nm. The channels 430 include wavelengths of 1470nm, 1490nm, 1510nm, 1530nm, 1550nm, 1570nm, 1590nm, and 1610nm.

Due to the broad wavelength gap, the temperature of the optical transmitter (e.g., a laser diode) does not need to be compensated. This means that an inexpensive laser diode can be used as the optical transmitter. In addition, by applying a wavelength division multiplexing method to the additional bidirectional wavelength band 420, the transmission capacity can be greatly expanded.

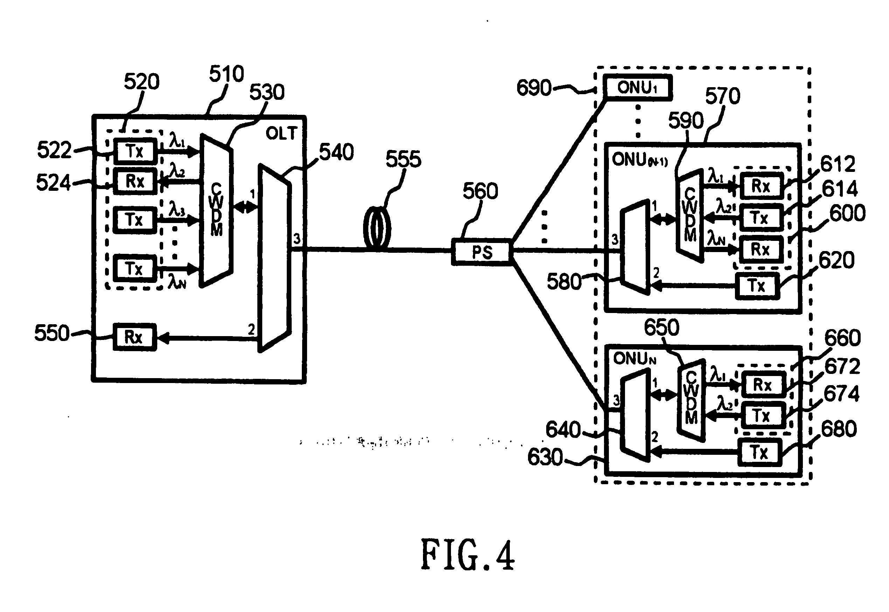

FIG. 4 is a schematic diagram of the passive optical network system in accordance with the preferred embodiment of the present invention. As shown in the Fig. 4, the passive optical network system includes an optical line termination 510, a fiber 555, a power splitter 560, and N optical network elements 690.

The optical line termination 510 includes an optical transceiver 520, a wavelength division multiplexer 530, an optical divider 540, and a first optical receiver 550.

The optical transceiver 520 includes a plurality of optical transmitters 522 and a second optical receiver 524. Preferably, the optical transmitter 522 includes a laser diode, and the second optical receiver 524 includes a photodiode. Allocated to each optical transmitters 522 or the second optical receiver 524 are downstream channels having a designated wavelength (λ₁, λ₂, λ₃...λ_{N}) or a second upstream channel, respectively.

A 1xN CWDM (Coarse Wavelength Division Multiplexer) is preferably used for the wavelength division multiplexer 530. In this arrangement, the downstream optical signal includes N/2 of the downstream signals.

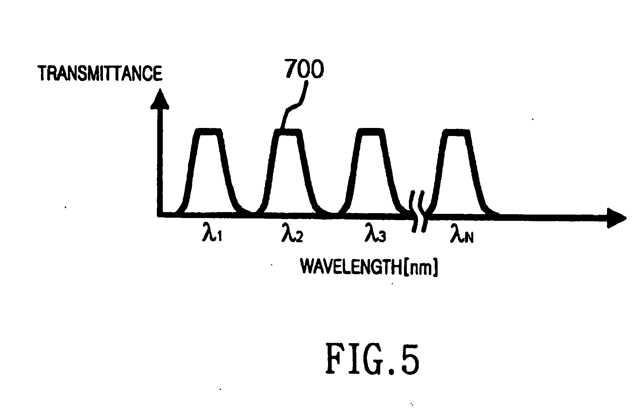

FIG. 5 is a diagram showing an output characteristic of the optical line termination 510 depicted in FIG. 4 at the output of the wavelength division multiplexer 530. As depicted in the drawing, output characteristic of the wavelength division multiplexer 530 is expressed in terms of transmittance per wavelength. In particular, the ups and downs of the transmittance plotted in the graph 700 of transmittance per wavelength are set to be repeated periodically, and the wavelength between the N downstream channels and the second upstream channels is blocked by the wavelength division multiplexer 530.

Referring to FIG. 4 again, a 1x2 wavelength division multiplexer (more preferably, a 1x2 CWDM including a thin filter) may be used for the optical divider 540. The optical divider 540 outputs downstream optical signals, which are inputted into a first port, to a third port, and outputs the first upstream channels among other upstream optical signals that are inputted to the third port through a second port, and outputs upstream signals composed of the second upstream channels exclusively to the first port. In this arrangement, the third port is connected to the fiber 555. The second upstream channels are included in the bidirectional wavelength band.

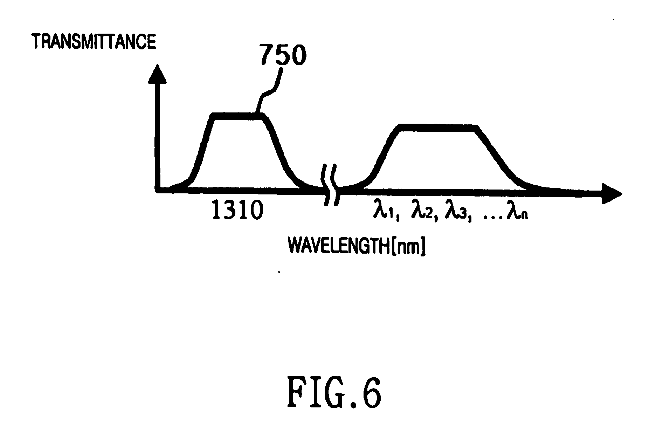

FIG. 6 is a diagram illustrating an output characteristic of the optical line termination 510 depicted in FIG. 4 at the output of the optical divider 540. More specifically, it is a graph 750 representing a relation between wavelength and transmittance of the optical divider 540. As shown in the graph, only wavelengths included in the upstream wavelength band and the additional bidirectional wavelength band are outputable from the optical divider 540.

Referring back to FIG. 4, the first optical receiver 550 includes a photodiode. The first optical receiver 550 converts a first upstream channel at a designated wavelength that has been input through the second port of the optical divider 540 to an electric signal. This converted signal is then output.

A 1xN power splitter is preferably used for the power splitter 560. The power splitter 560 performs a uniform power split on the downstream optical signals input through a first port that is connected to the fiber 555. The split optical signals are output through a plurality of second ports as N optical network elements 690. In addition, the power splitter 560 combines the first and the second upstream channels, which are inputted from the N optical network element 690 through the plurality of second ports, to the fiber through the first port.

Each optical network element 690 includes an optical divider (e.g., 580, 640), a wavelength division multiplexer (e.g., 590, 650), an optical transceiver (e.g., 600, 660), and a first optical transmitter (e.g., 620, 680).

The following describes regarding the Nth optical network element 630.

A 1x2 wavelength division multiplexer (more preferably, a 1x2 CWDM including a thin filter) may be used for the optical divider 640. The optical divider 640 combines the second upstream channels that are input through the first port to the first upstream channels that are inputted through the second port at the fiber 555, and outputs downstream optical signals inputted through the fiber 555 through the first port.

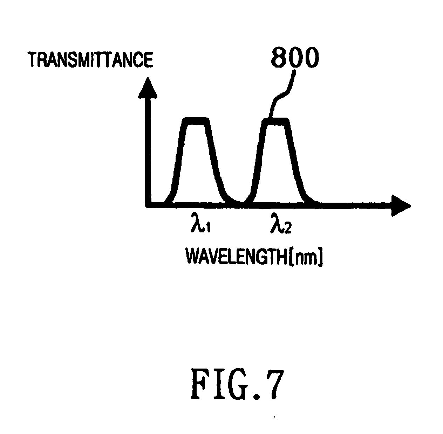

FIG. 7 is a diagram illustrating output characteristic of the Nth optical network element 630 depicted in FIG. 4 at the output of the Nth wavelength division multiplexer 650. FIG. 7 is a graph 800 showing a relation between transmittance and wavelength in the wavelength division multiplexer 650.

Referring back to FIG. 4, the optical transceiver 660 includes a second optical transmitter 674 and an optical receiver 672. the second optical transmitter 674 includes a laser diode and the optical receiver 672 includes a photodiode.
the first optical transmitter 680 includes a laser diode. The first optical transmitter 680 outputs a first upstream channel having a designated wavelength.

The following explains about the (N-1)th optical network element 570, and the same technologies will not be repeated.

A 1xN CMDM is may used for the wavelength division multiplexer 590. The wavelength division multiplexer 590 demultiplexes downstream optical signals that are received to the ports on the input side, and outputs the demultiplexed signals through the ports on the output side. In particular, the wavelength division multiplexer 590 outputs the first and the Nth downstream channels among other N/2 downstream channels composing the downstream optical signal.

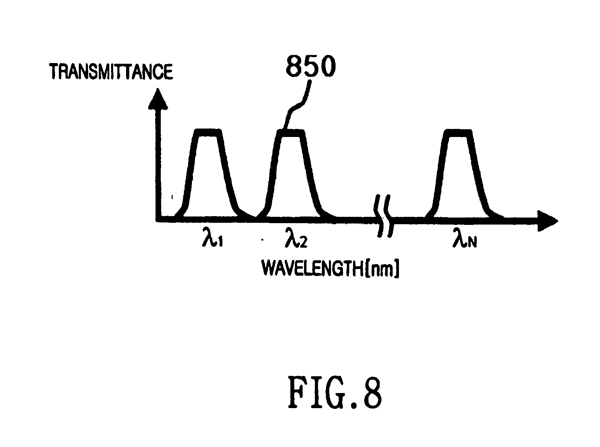

FIG. 8 is a diagram illustrating output characteristic of an (N-1)th optical network element depicted in FIG. 4 at the output of the (N-1)th wavelength division multiplexer 590. More specifically, FIG. 8 is a graph 850 showing a relation between transmittance and wavelength in the wavelength division multiplexer. As shown in Fig. 8, the wavelength division multiplexer 590 outputs the first and the Nth downstream channels among other downstream optical signals, and outputs the second upstream channel inputted from the second optical transmitter 614 to the optical divider 580.

In conclusion, the wavelength division multiplexing passive optical network system embodying the principles of the present invention is useful in many ways. For example, when bandwidth on the subscriber's side needs to be expanded, a laser diode and a photodiode used as part of the optical transmitter and the optical receiver in a corresponding optical network element may be simply added to the system. Moreover, the entire bandwidth can be expanded simply replacing an existing wavelength division multiplexer with the one having a larger transmission capacity, and adding more optical receivers and optical transmitters to the system.

As described above, the wavelength division multiplexing passive optical network system embodying the principles of the present invention is advantageous in that it can expand the bandwidth in use by applying the wavelength division multiplexing method to the downstream wavelength band.

In addition, the wavelength division multiplexing passive optical network system embodying the principles of the present invention is cost-effective by broadening the wavelength gap between downstream channels using the CWDM (Coarse Wavelength Division Multiplexer).

Lastly, the wavelength division multiplexing passive optical network system embodying the principles of the present invention is very useful when the transmission capacity needs to be expanded without changing the basis of the entire system because all that needs to be done is simply adding or replacing the number of elements in the system.

## Claims

1. A wavelength division multiplexing passive optical network system, comprising:
an optical line termination (510) for transmitting downstream optical signals through a fiber (555) the downstream optical signals being obtained by performing wavelength division multiplexing on downstream channels having different wavelengths from one another, and for demultiplexing upstream optical signals received through the fiber, the upstream optical signals including a first upstream channel and a second upstream channel, the first and second upstream channels being included in different wavelength bands from one another,
a power splitter (560) for performing a uniform power split on the downstream optical signals received through a first splitter port that is connected to the fiber, and for outputting the split optical signals through a plurality of second splitter ports, and for outputting upstream optical signals through the first splitter port, where the upstream optical signals are combination of the first and the second upstream channels received from the plurality of second splitter ports; and
a plurality of optical network elements (630) for demultiplexing the downstream optical signals from the power splitter (560) by wavelengths, and for transmitting the first and the second upstream channels to the power splitter (560);
wherein the wavelength of the first upstream channel is 1310nm and is included in a wavelength band (410) in a range of 1260nm to 1360nm, and the wavelengths of the downstream channels and the second upstream channel, are included in a bidirectional wavelength band (420) in a range of 1470nm to 1610nm wherein one of the downstream channels is having a wavelength of 1550nm or 1490nm; and **characterized by** that a
wavelength gap between the wavelengths of the downstream channels and the second upstream channel in the bidirectional wavelength band (420) is approximately 20nm.

2. An optical line termination apparatus (510) for use in a wavelength division multiplexing passive optical network system including a plurality of optical network element apparatus (30) for transmitting at least one upstream channel and receiving at least one downstream channel, wherein the optical line termination apparatus (510) is connected to the plurality of optical network element apparatus (630) and to a fiber (555), wherein the optical line termination apparatus comprises:
a plurality of transmitters (522) for outputting downstream channels each having a downstream designated wavelength;
a plurality of optical receivers for converting a first upstream channel and a second upstream channel, each being included in a different upstream wavelength band from one another, to an electric signal;
a wavelength division multiplexer (530) for outputting the downstream channels on which wavelength division multiplexing is performed, and for demultiplexing upstream optical signals including the second upstream channels; and
an optical divider (540) for combining the downstream optical signals, which are input from a first divider port, to the fiber, and for outputting the first upstream channel among other upstream optical signals, which are input through the fiber, through a second divider port, and for outputting an upstream optical signal including the second upstream channel only, to the first divider port
wherein the wavelength of the first upstream channel is 1310nm and is included in a wavelength band (410) in a range of 1260nm to 1360nm, and the wavelengths of the downstream channels and the second upstream channel are included in a bidirectional wavelength band (420) in a range of 1470nm to 1610nm; and **characterised by** that
the wavelength gap between the wavelengths of the downstream channels and the second upstream channel in the bidirectional wavelength band (420) in the range of 1470nm to 1610nm is approximately 20nm.

3. An optical network element apparatus (630) for use in a wavelength division multiplexing passive optical network system including an optical line termination apparatus (510) for receiving at least one upstream channel and for transmitting a plurality of downstream channels, wherein the optical network element apparatus (630) is connected to the optical line termination apparatus (510) and to a fiber (555) wherein the optical network element apparatus (630) comprises:
a plurality of transmitters (522) for outputting a first and a second upstream channel each being included in a different upstream wavelength band from one another,
an optical divider (540) for performing wavelength division multiplexing on the second upstream channel that is input through a first divider port and a first upstream channel that is input through a second divider port, and for combining the wavelength division multiplexed channels to a fiber, and for outputting downstream optical signals, which are input through the fiber, through the first divider port;
a wavelength division multiplexer (530) for demultiplexing the downstream optical signals, which are input through the first divider port, by wavelengths; and
a plurality of optical receivers for converting the wavelength division demultiplexed - downstream channels to electric signals;
wherein the wavelength of the first upstream channel is 1310nm and is included in a wavelength band in a range of 1260nm to 1360nm, and the wavelengths of the downstream channels and the second upstream channel are included in a bidirectional wavelength band in a range of 1470nm to 1610nm; and
wherein the wavelength gap between the wavelength of the downstream channels and the second upstream channel in the bidirectional wavelength band in the range of 1470nm to 1610nm is approximately 20nm.

4. The apparatus defined in claim 3, wherein the optical divider is a 1x2 coarse wavelength division multiplexer including a thin filter and fiber.

## Patentansprüche

1. Passives optisches Wellenlängenmultiplex-Netzwerksystem, welches umfasst:
eine optische Leitungsabschlusseinrichtung (510) für das Übertragen von optischen Downstream (netzabwärts)-Signalen durch eine Faser (555), wobei die optischen Downstream-Signale durch Wellenlängen-Multiplexen von Downstream-Kanälen, welche voneinander unterschiedliche Wellenlängen aufweisen, erhalten werden und für das Demultiplexen von optischen Upstream (netzaufwärts)-Signalen, welche durch die Faser empfangen wurden, wobei die optischen Upstream-Signale einen ersten Upstream-Kanal und einen zweiten Upstream-Kanal beinhalten, und wobei der erste und der zweite Upstream-Kanal in voneinander verschiedenen Wellenlängenbändern beinhaltet sind;
einen Leistungsverteiler (560) für das Durchführen einer gleichmäßigen Leistungsverteilung der optischen Downstream-Signale, welche durch einen ersten mit der Faser verbundenen Verteileranschluss empfangen wurden, und für das Ausgeben der verteilten optischen Signale durch eine Vielzahl von zweiten Verteileranschlüssen, und für das Ausgeben von optischen Upstream-Signalen durch den ersten Verteileranschluss, wobei die optischen Upstream-Signale eine Kombination der ersten und der zweiten Upstream-Kanäle sind, welche von der Vielzahl von zweiten Verteileranschlüssen empfangen wurden; und
eine Vielzahl von optischen Netzwerk-Elementen (630) für das Demultiplexen der optischen Downstream-Signale von dem Leistungsverteiler (560) nach Wellenlängen, und für das Übertragen der ersten und zweiten Upstream-Kanäle zu dem Leistungsverteiler (560);
wobei die Wellenlänge des ersten Upstream-Kanals 1310 nm ist und in einem Wellenlängenband (410) im Bereich von 1260 nm bis 1360 nm beinhaltet ist, und die Wellenlängen der Downstream-Kanäle und des zweiten Upstream-Kanals in einem bidirektionalen Wellenlängenband (420) in einem Bereich von 1470 nm bis 1610 nm beinhaltet sind, wobei einer der Downstream-Kanäle eine Wellenlänge von 1550 nm oder 1490 nm aufweist; **dadurch gekennzeichnet, dass** eine Wellenlängenlücke zwischen den Wellenlängen der Downstream-Kanäle und des zweiten Upstream-Kanals in dem bidirektionalen Wellenlängenband (420) ungefähr 20 nm ist.

2. Optische Leitungsabschlusseinrichtung (510) zur Verwendung in einem passiven optischen Wellenlängenmultiplex-Netzwerksystem, welches eine Vielzahl von optischen Netzwerk-Elementen (630) für das Übertragen von mindestens einem Upstream-Kanal und dem Empfangen von mindestens einem Downstream-Kanal umfasst, wobei die optische Leitungsabschlusseinrichtung (510) mit der Vielzahl von optischen Netzwerk-Elementen (630) und einer Faser (555) verbunden ist, wobei die optische Leitungsabschlusseinrichtung umfasst:
eine Vielzahl von Sendern (522) für das Ausgeben von Downstream-Kanälen, welche jeweils eine designierte Downstream-Wellenlänge aufweisen;
eine Vielzahl von optischen Empfängern für das Umwandeln eines ersten Upstream-Kanals und eines zweiten Upstream-Kanals, welche jeweils in voneinander verschiedenen Wellenlängenbändern beinhaltet sind, in ein elektrisches Signal;
eine Wellenlängenmultiplexeinrichtung (530) zum Ausgeben der Downstream-Kanäle, an welchen das Wellenlängenmultiplexen durchgeführt wurde, und zum Demultiplexen von optischen Upstream-Signalen, welche die zweiten Upstream-Kanäle umfassen;
ein optischer Teiler (540) für das Kombinieren der optischen Downstream-Signale, welche von einem ersten Teileranschluss eingegeben werden, zu der Faser, und für das Ausgeben des ersten Upstream-Kanals unter anderen optischen Upstream-Signalen, welche durch die Faser eingegeben werden, durch einen zweiten Teileranschluss und für das Ausgeben eines optischen Upstream-Signals, welches nur den zweiten Upstream-Kanal umfasst, an den ersten Teileranschluss;
wobei die Wellenlänge des ersten Upstream-Kanals 1310 nm ist und in einem Wellenlängenband (410) im Bereich von 1260 nm bis 1360 nm beinhaltet ist, und die Wellenlängen der Downstream-Kanäle und des zweiten Upstream-Kanals in einem bidirektionalen Wellenlängenband (420) in einem Bereich von 1470 nm bis 1610 nm beinhaltet sind; **dadurch gekennzeichnet, dass** die Wellenlängenlücke zwischen den Wellenlängen der Downstream-Kanäle und des zweiten Upstream-Kanals in dem bidirektionalen Wellenlängenband (420) in dem Bereich von 1470 nm bis 1610 nm ungefähr 20 nm ist.

3. Optische Netzwerk-Element-Einrichtung (630) zur Verwendung in einem passiven optischen Wellenlängenmultiplex-Netzwerksystem, welches eine optische Leitungsabschlusseinrichtung (510) für das Empfangen von mindestens einem Upstream-Kanal und für das Übertragen einer Vielzahl von Downstream-Kanälen umfasst, wobei die optische Netzwerk-Element-Einrichtung (630) mit der optischen Leitungsabschlusseinrichtung (510) und einer Faser (555) verbunden ist, wobei die optische Netzwerk-Element-Einrichtung (630) umfasst:
eine Vielzahl von Sendern (522) für das Ausgeben eines ersten und eines zweiten Upstream-Kanals, welche jeweils in voneinander verschiedenen Wellenlängenbändern beinhaltet sind;
ein optischer Teiler (540) für das Wellenlangen-Multiplexen des zweiten Upstream-Kanals, welcher von einem ersten Teileranschluss eingegeben wurde und eines ersten upsteam-Kanals, welcher von einem zweiten Teileranschluss eingegeben wurde, und für das Kombinieren der gemultiplexten Kanäle zu einer Faser, und für das Ausgeben von optischen Downstream-Kanälen, welche durch die Faser eingegeben werden, durch den ersten Teileranschluss;
eine Wellenlängenmultiplexeinrichtung (530) für das Demultiplexen der optischen Downstream-Signale, welche durch den ersten Teileranschluss eingegeben wurden, nach Wellenlängen; und
eine Vielzahl von optischen Empfängern für das Umwandeln der Wellenlängendemultiplexierten Downstream-Kanäle in elektrische Signale;
wobei die Wellenlänge des ersten Upstream-Kanals 1310 nm ist und in einem Wellenlängenband im Bereich von 1260 nm bis 1360 nm beinhaltet ist, und die Wellenlängen der Downstream-Kanäle und des zweiten Upstream-Kanals in einem bidirektionalen Wellenlängenband in einem Bereich von 1470 nm bis 1610 nm beinhaltet sind; und
wobei die Wellenlängenlücke zwischen den Wellenlängen der Downstream-Kanäle und des zweiten Upstream-Kanals in dem bidirektionalen Wellenlängenband in dem Bereich von 1470 nm bis 1610 nm ungefähr 20 nm ist.

4. Vorrichtung gemäß Anspruch 3, wobei der optische Teiler ein grober (coarse) 1 x2 Wellenlängenmultiplexer ist, welcher ein dünnes Filter (thin filter) und Faser beinhaltet.

## Revendications

1. Système de réseau optique passif à multiplexage par répartition en longueur d'onde comprenant :
une terminaison de ligne optique (510) destinée à transmettre des signaux optiques aval au travers d'une fibre (555), les signaux optiques aval étant obtenus en exécutant un multiplexage par répartition en longueur d'onde sur des canaux aval ayant des longueurs d'onde différentes les unes par rapport aux autres, et destinée à démultiplexer des signaux optiques amont reçus au travers de la fibre, les signaux optiques amont comprenant un premier canal amont et un deuxième canal amont, les premier et deuxième canaux amont étant inclus dans des bandes de longueurs d'onde différentes les unes des autres ;
un diviseur de puissance (560) destiné à exécuter une répartition de puissance uniforme sur les signaux optiques aval reçus au travers d'un premier point de connexion de diviseur qui est connecté à la fibre, et destiné à fournir les signaux optiques divisés au travers d'une pluralité de deuxièmes points de connexion de diviseur et destiné à fournir en sortie des signaux optiques amont au travers du premier point de connexion de diviseur, où les signaux optiques amont sont une combinaison des premier et deuxième canaux amont reçus à partir de la pluralité de deuxièmes points de connexion de diviseur ; et
une pluralité d'éléments de réseau optique (630) destinés à démultiplexer les signaux optiques aval provenant du diviseur de puissance (560) par les longueurs d'onde et destinés à transmettre les premier et deuxième canaux amont au diviseur de puissance (560) ;
où la longueur d'onde du premier canal amont est 1310 nm et est incluse dans une bande de longueurs d'onde (410) dans une plage de 1260 nm à 1360 nm, et les longueurs d'onde des canaux aval et du deuxième canal amont sont incluses dans une bande de longueurs d'onde bidirectionnelle (420) dans une plage de 1470 nm à 1610 nm où l'un des canaux aval présente une longueur d'onde de 1550 nm ou 1490 nm et **caractérisé en ce que**
un intervalle de longueurs d'onde entre les longueurs d'onde des canaux aval et du deuxième canal amont dans la bande de longueurs d'onde bidirectionnelle (420) est d'approximativement 20 nm.

2. Dispositif de terminaison de ligne optique (510) à utiliser dans un système de réseau optique passif à multiplexage par répartition en longueur d'onde comprenant une pluralité de dispositifs d'éléments de réseau optique (630) afin de transmettre au moins un canal amont et recevoir au moins un canal aval, où le dispositif de terminaison de ligne optique (510) est connecté à la pluralité de dispositifs d'éléments de réseau optique (630) et à une fibre (555) où le dispositif de terminaison de ligne optique comprend :
une pluralité d'émetteurs (522) destinés à fournir en sortie des canaux aval, chacun ayant une longueur d'onde aval désignée ;
une pluralité de récepteurs optiques destinés à convertir un premier canal amont et un deuxième canal amont, chacun étant inclus. dans une bande de longueurs d'onde amont différente des autres, en un signal électrique ;
un multiplexeur par répartition en longueur d'onde (530) destiné à fournir en sortie les canaux aval sur lesquels le multiplexage par répartition en longueur d'onde est exécuté et destiné à démultiplexer les signaux optiques amont comprenant les deuxièmes canaux amont ; et
un diviseur optique (540) destiné à combiner les signaux optiques aval, qui sont reçus en entrée depuis un premier point de connexion de diviseur, à la fibre, et destiné à fournir en sortie le premier canal amont parmi d'autres signaux optiques amont, qui sont reçus en entrée par l'intermédiaire de la fibre, au travers d'un deuxième point de connexion de diviseur, et destiné à fournir en sortie un signal optique amont comprenant le deuxième canal amont uniquement, au premier point de connexion de diviseur,
où la longueur d'onde du premier canal amont est 1310 nm et est incluse dans une bande de longueurs d'onde (410) dans une plage de 1260 nm à 1360 nm et les longueurs d'onde des canaux aval et du deuxième canal amont sont incluses dans une bande de longueurs d'onde bidirectionnelle (420) dans une plage de 1470 nm à 1610 nm et **caractérisé en ce que**
l'intervalle de longueurs d'onde entre les longueurs d'onde des canaux aval et du deuxième canal amont dans la bande de longueurs d'onde bidirectionnelle dans la plage de 1470 nm à 1610 nm est d'approximativement 20 nm.

3. Dispositif d'élément de réseau optique (630) à utiliser dans un système de réseau optique passif à multiplexage par répartition en longueur d'onde comprenant un dispositif de terminaison de ligne optique (510) destiné à recevoir au moins un canal amont et destiné à transmettre une pluralité de canaux aval, où le dispositif d'élément de réseau optique (630) est connecté au dispositif de terminaison de ligne optique (510) et à une fibre (555) où le dispositif d'élément de réseau optique (630) comprend :
une pluralité d'émetteurs (522) destinés à fournir en sortie un premier et un deuxième canaux amont, chacun étant inclus dans une bande de longueurs d'onde amont différente des autres ;
un diviseur optique (540) destiné à exécuter un multiplexage par répartition de longueur d'onde sur le deuxième canal amont qui est reçu en entrée au travers d'un premier point de connexion de diviseur et un premier canal amont qui est reçu en entrée par l'intermédiaire d'un deuxième point de connexion de diviseur, et destiné à combiner les canaux multiplexés par multiplexage par répartition en longueur d'onde à une fibre, et destiné à fournir en sortie des signaux optiques aval qui sont appliqués en entrée par l'intermédiaire de la fibre, au travers du premier point de connexion de diviseur ;
un multiplexeur par répartition en longueur d'onde (530) destiné à démultiplexer les signaux optiques aval, qui sont reçus en entrée par l'intermédiaire du premier point de connexion de diviseur, par les longueurs d'onde; et
une pluralité de récepteurs optiques destinés à convertir les canaux aval démultiplexés par démultiplexage par répartition en longueur d'onde en signaux électriques ;
où la longueur d'onde du premier canal amont est 1310 nm et est incluse dans une bande de longueurs d'onde dans une plage de 1260 nm à 1360 nm et les longueurs d'onde des canaux aval et du deuxième canal amont sont incluses dans une bande de longueurs d'onde bidirectionnelle dans une plage de 1470 nm à 1610 nm ; et
où l'intervalle de longueurs d'onde entre les longueurs d'onde des canaux aval et du deuxième canal amont dans la bande de longueurs d'onde bidirectionnelle dans la plage de 1470 nm à 1610 nm est d'approximativement 20 nm.

4. Dispositif selon la revendication 3, dans lequel le diviseur optique est un multiplexeur par répartition en longueurs d'onde approximatif 1 x 2 comprenant un filtre mince et une fibre.
